# EUROPÄISCHE PATENTSCHRIFT

(11) **EP 2 753 886 B1**
(45) Veröffentlichungstag und Bekanntmachung des Hinweises auf die Patenterteilung: **08.08.2018**
(21) Anmeldenummer: 12787351.1
(22) Anmeldetag: 04.09.2012
(51) Int. Cl.: F25B 15/00, F25B 39/02

(54) **VERFAHREN ZUM BETREIBEN EINER KÄLTEANLAGE UND KÄLTEANLAGE**
METHOD FOR OPERATING A COOLING SYSTEM AND A COOLING SYSTEM
PROCÉDÉ POUR FAIRE FONCTIONNER UN APPAREIL FRIGORIFIQUE ET APPAREIL FRIGORIFIQUE

(30) Priorität: 06.09.2011 DE 102011053310
(43) Veröffentlichungstag der Anmeldung: 16.07.2014
(73) Patentinhaber: Technische Universität Berlin, 10623 Berlin (DE)
(72) Erfinder: PETERSEN, Stefan, 10245 Berlin (DE); HÜLS GÜIDO, Walther, 14612 Falkensee (DE)
(74) Vertreter: Bittner, Thomas L.
(86) Internationale Anmeldenummer: PCT/DE2012/100263
(87) Internationale Veröffentlichungsnummer: WO 2013/034145

(56) Entgegenhaltungen:
- US-A- 3 837 174
- US-A- 5 345 786
- US-A1- 2011 167 864

## Beschreibung

Die Erfindung betrifft ein Verfahren zum Betreiben einer Kälteanlage, insbesondere einer Sorptionskälteanlage, sowie eine Kälteanlage in ein- oder mehrstufiger Ausführung.

### Hintergrund der Erfindung

Eine Technologie auf dem Gebiet der Kälteerzeugung ist die Sorptionstechnik. Hierbei wird Wärme, zum Beispiel in Form von Abwärme aus technologischen Prozessen, Wärme aus der Kraft-Wärme-Kopplung, Solarwärme oder Geothermie, genutzt, um ein zu kühlendes Medium in Form zu kühlen, insbesondere ein Fluid.

Sorptionskälteanlagen sind in Form von Absorptionskälteanlagen und Adsorptionskälteanlagen bekannt. Die Absorptionskälteanlagen gehören zur Gruppe der kontinuierlich arbeitenden Sorptionskälteanlagen. Als Absorptionsmittel kommen flüssige Stoffe zum Einsatz. Übliche Anlagen arbeiten hauptsächlich mit den Stoffpaaren Wasser / Lithiumbromid und Ammoniak / Wasser.

Die Absorptionskältemaschine lässt sich häufig in zwei Abschnitte unterteilen. In einem ersten Abschnitt umfasst die Absorptionskälteanlage einen Absorber, einen Austreiber, eine Pumpe und eine Drossel. Dieser Abschnitt wird häufig als thermischer Verdichter bezeichnet. In ihm findet ein Lösungsmittelumlauf statt. Ein zweiter Abschnitt der Absorptionskälteanlage ist mit einem Verflüssiger, einem Verdampfer und einer Drossel ausgestattet. Im Verdampfer wird das bereitgestellte Kältemittel unter Aufnahme von Wärmeenergie von dem zu kühlenden Medium verdampft. Das verdampfte Kältemittel gelangt dann zum Absorber, wo das verdampfte Kältemittel von dem Lösungsmittel aufgenommen wird, nämlich mittels Absorption. Die hierbei frei werdende Absorptionsenthalpie (Lösungsenthalpie) muss abgeführt werden. Durch die Aufnahme des Kältemittels wird aus einer armen Lösung eine reiche Lösung. Diese Lösung wird mittels einer Pumpe von einem niederen Absorberdruck auf einen hohen Austreiberdruck gebracht. Hierbei durchströmt das Lösungsmittel regelmäßig noch einen Gegenstromwärmeübertrager. Dieser trägt zur Erhöhung der Wirtschaftlichkeit des Verfahrens bei, indem der Wärmebedarf des Austreibers verringert wird und gleichzeitig die abzuführende Wärme aus dem Absorber sinkt. Im Austreiber wird unter Zuführung von Nutzwärme das Kältemittel aus dem Lösungsmittel ausgetrieben, wodurch Kältemitteldampf erzeugt wird, welcher anschließend im Verflüssiger in die flüssige Phase überführt wird. Das so rückgewonnene Kältemittel wird über eine Drossel dem Verdampfer wieder zugeführt.

Die Adsorptionskälteanlage zeichnet sich im Unterschied zur Absorptionskälteanlage, welche flüssige Absorptionsmittel verwendet, durch die Nutzung der Adsorption des verdampften Kältemittels durch einen festen Stoff (Adsorbens) aus. In Verbindung mit Adsorptionskälteanlagen kommen im Bereich der Klimatechnik zum Beispiel Stoffpaarungen wie Wasser / Zeolith und Wasser / Silicagel zum Einsatz.

Kälteerzeugungsanlagen erzielen in den vergangenen Jahren enorme Zuwachsraten im Markt. Längere Kühlketten in der Lebensmittelindustrie, höhere Prozessleistungen und komfortablere Wohn- und Arbeitsbedingungen erfordern neue effiziente Kälteerzeugungsanlagen. Hierbei dominieren gegenwärtig elektrisch angetriebene Kompressionsanlagen. Ergänzend werden thermisch angetriebene Ab- und Adsorptionsverfahren genutzt. Letztere stellen vor allem vor dem Hintergrund der Effizienzsteigerung der Energieverwendung auch zur Steigerung von KWK Anlagen einen Ressourcen schonenden Weg dar, in einem wachsenden Markt der Kältenutzung die Stromnachfrage nicht zusätzlich zu steigern und stattdessen die Abwärme aus der Stromproduktion direkt zur Kälteerzeugung einzusetzen.

Das Dokument US 5,345,786 A offenbart eine Brennstoffzelle und eine mit der Brennstoffzelle gekoppelte Kälte- / Wärmeanlage. Ein Kühlmittel der Brennstoffzelle wird in den Kreislauf der Wärme- / Kälteanlage eingebracht, um die Wärme hier zu nutzen. Das Dokument US 5,345,786 A offenbart ein Verfahren zum Betreiben einer Kälteanlage und eine Kälteanlage gemäß dem Oberbegriff des Anspruchs 1 und gemäß des Anspruchs 10. Das Dokument US 3,837,174 A offenbart eine Steuereinrichtung für eine Wärmetauscheranlage.

Das Dokument US 20011/0167864 A1 offenbart eine Kälteanlage, die mittels Ammoniak eine Kühlung bereitstellt.

### Zusammenfassung der Erfindung

Aufgabe der Erfindung ist es, verbesserte Technologien in Verbindung mit Kälteanlagen anzugeben, mit denen die Effizienz derartiger Anlagen erhöht werden kann.

Diese Aufgabe wird erfindungsgemäß durch ein Verfahren zum Betrieben einer Kälteanlage nach dem unabhängigen Anspruch 1 sowie durch eine Kälteanlage nach dem unabhängigen Anspruch 10 gelöst. Vorteilhafte Ausgestaltungen der Erfindung sind Gegenstand von abhängigen Unteransprüchen.

Die Erfindung umfasst den Gedanken, die Kühl- oder Kälteleistung in der Verdampfereinrichtung, also den Übertrag von Wärmeenergie von dem zu kühlenden Fluid auf das Kältemittel, dadurch zu optimieren, dass dem Kältemittel im Reservoir der Verdampfereinrichtung (zusätzlich) Fremdwärmeenergie zugeführt wird, die von einer Fremdwärmequelle bereitgestellt ist. Mit Hilfe dieser Fremdwärmeenergie wird das Kältemittel in dem Reservoir praktisch fremd angeregt, derart, dass eine Blasenbildung induziert oder eine infolge des Kühlwärmeübertrages bereits ausgelöste Blasenbildung verstärkt wird. Dies ist die Folge eines sogenannten pool-boiling-Prozesses, der durch den Kühlwärmeübertrag von dem zu kühlenden Fluid auf das Kältemittel im Reservoir mit dem Kältemittel ausgelöst wird.

Die Verstärkung der bereits ausgelösten Blasenbildung kann hierbei darin bestehen, eine bereits bestehende Blasenbildung länger aufrecht zu erhalten, als dies durch den Kühlwärmeübertrag von dem zu kühlenden Fluid auf das Kältemittel eigentlich möglich wäre, oder die hierdurch ausgelöste Blasenbildung zu vergrößern, also insbesondere zusätzliche Blasen zu bilden.

Die Blasenbildung im Reservoir mit dem Kältemittel unterstützt auf unterschiedliche Art und Weise den Kühlwärmeübertrag von dem zu kühlenden Fluid auf das Kältemittel in Wärmetauscher. Einerseits wird durch die Blasenbildung das Auftreten von Wellen oder anderen Bewegungen des Kältemittels bewirkt oder unterstützt, wodurch zum Beispiel bei einem Wärmetauscher mit in das Kältemittel eintauchenden Wärmeschlangen der Kontakt zwischen der Oberfläche der Wärmeschlangen des Wärmetauschers und dem Kältemittel erweitert wird. Auch wird hierdurch die Fließgeschwindigkeit des Kältemittels entlang der Oberfläche des Wärmetauschers erhöht, was wiederum zum verbesserten Kühlwärmeübertrag beiträgt. Durch verschiedene Effekte wird die Effizienz für den Wärmeübergang zwischen dem zu kühlenden Fluid und dem Kältemittel verbessert. So kann zum Beispiel die Blasenbildung dazu führen, dass vermehrt aus dem Kältemittel herausgeschleuderte Spritzer auf die Oberfläche des ein- oder mehrmoduligen Wärmetauschers treffen, sodass es zu einem optimierten Wärmeübertrag von dem zu kühlenden Fluid auf das Kältemittel kommt. Diese positiven Wirkungen überkompensieren etwaige nachteilige Effekte, die aufgrund des Fremdwärmeeintrages auf das Kältemittel entstehen können, beispielsweise zusätzlicher Aufwand in den der Verdampfereinrichtung nachgeschalteten Komponenten der Kälteanlage.

Die in der Verdampfereinrichtung dem Kältemittel zusätzlich übertragene Fremdwärmeenergie kann von beliebigen Fremdwärmequellen bereitgestellt werden. Bevorzugt ist vorgesehen, prozessinterne Abwärme, Abwärme aus anderen Prozessen, Wärme aus einer Kraft-Wärme-Kopplung, Solarwärme und / oder Geothermie einzuspeisen.

Bei der Kälteanlage handelt es sich zum Beispiel um eine Sorptionskälteanlage. Die Verflüssigungseinrichtung ist dann als Adsorptions- / Absorptionseinrichtung ausgeführt.

Eine bevorzugte Weiterbildung der Erfindung sieht vor, dass in Verbindung mit dem Zuführen der Fremdwärmeenergie ein Siedezustand oder ein siedeähnlicher Zustand des Kältemittels im Reservoir, der jeweils die Blasenbildung umfasst, bewirkt wird. Das Ausbilden eines Siedezustandes oder siedeähnlichen Zustandes des Kältemittels kann auch als sogenanntes Pool-Boiling bezeichnet werden. Hierbei kann vorgesehen sein, dass ein Siedezustand oder ein siedeähnlicher Zustand bereits durch den Kühlwärmeübertrag von dem zu kühlenden Fluid auf das Kältemittel ausgelöst wird. Das zusätzliche Übertragen der Fremdwärmeenergie auf das Kühlmittel verstärkt dann diesen Zustand und / oder hält ihn länger aufrecht. Charakterisiert sind der Siedezustand oder der siedeähnliche Zustand insbesondere durch die Blasenbildung, die gemäß der oben beschriebenen Wirkungen zu einer verbesserten Wärmeübertragung zwischen dem zu kühlenden Fluid und dem Kältemittel führt.

Bei einer zweckmäßigen Ausgestaltung der Erfindung kann vorgesehen sein, dass dem Kältemittel in dem Reservoir wenigstens ein Teil der Fremdwärmeenergie mittels einer stofflichen Zumischung zu dem Kältemittel zugeführt wird. Hierbei wird in einer Ausführungsform das Kältemittel stofflich ergänzt, indem Kältemittel selbst und / oder ein oder mehrere hiermit verträgliche Stoffe dem Kältemittel zugemischt werden, wobei die zugemischten Stoffe dem Kältemittel im Reservoir die Fremdwärmeenergie zuführen.

Eine vorteilhafte Ausführungsform der Erfindung sieht vor, dass dem Kältemittel in dem Reservoir wenigstens ein Teil der Fremdwärmeenergie mittels stofflich getrennter Wärmeübertragung zugeführt wird. Bei dieser Ausführungsform erfolgt der Fremdwärmeenergieübertrag auf das Kältemittel wenigstens teilweise frei von stofflicher Mischung oder Zumischung. Zum Beispiel wird ein Fluid in einem Wärmetauscher stofflich getrennt von dem Kältemittel geführt, derart, dass an der Oberfläche des Wärmetauschers der Fremdwärmeenergieübertrag von dem externen Fluid auf das Kältemittel erfolgt.

Bevorzugt sieht eine Fortbildung der Erfindung vor, dass die Fremdwärmeenergie mittels eines Fluidstroms bereitgestellt wird, dessen Fluidtemperatur zumindest vor dem Übertragen der Fremdwärmeenergie auf das Kältemittel höher ist als die Temperatur des Kältemittels im Reservoir. Der hierdurch ausgelöste Fremdwärmeenergieübertrag kann in Verbindung mit dem Prozess der stofflichen Zumischung als auch mit dem Prozess der stofflich getrennten Wärmeübertragung vorgesehen sein.

Bei einer vorteilhaften Ausgestaltung der Erfindung kann vorgesehen sein, dass die Fremdwärmeenergie mittels eines Fluidstroms bereitgestellt wird, dessen Fluidtemperatur zumindest vor dem Kühlen mittels Übertragen der Kühlwärmeenergie von dem zu kühlenden Fluid auf das Kältemittel höher ist als die Temperatur des zu kühlenden Fluids.

Eine Weiterbildung der Erfindung kann vorsehen, dass ein oder mehrere von dem zu kühlenden Fluid durchströmte Leitungsabschnitte des Wärmetauschers in der Verdampfereinrichtung zumindest teilweise in das Kältemittel im Reservoir eintauchend gebildet werden. Sind die von dem zu kühlenden Fluid durchströmten Leitungsabschnitte des Wärmetauschers nur teilweise in das Kältemittel eingetaucht, kann die bewirkte Blasenbildung dazu führen, dass weitere, zuvor nicht mit dem Kältemittel benetzte Oberflächenabschnitte der Wärmetauscherleitungen mit dem Kältemittel in Kontakt kommen. Dieses kann Folge einer durch die Blasenbildung ausgelösten Wellenbewegung in dem Reservoir sein und / oder von Spritzerbildung im Bereich der Kältemitteloberfläche.

Eine bevorzugte Weiterbildung der Erfindung sieht vor, dass ein oder mehrere von dem zu kühlenden Fluid durchströmte Leitungsabschnitte des Wärmetauschers in der Verdampfereinrichtung mit dem Kältemittel aus dem Reservoir berieselt werden.

Bei einer zweckmäßigen Ausgestaltung der Erfindung kann vorgesehen sein, dass die Fremdwärmeenergie als Wärme aus einem der folgenden Prozesse bereitgestellt wird: Abwärme eines technologischen Prozesses, Wärme aus der Kraft-Wärme-Kopplung, Solarwärme und Wärme aus der Geothermie.

In Verbindung mit der Kälteanlage gelten die in Verbindung mit dem Verfahren zum Betreiben der Sorptionskälteanlage gemachten Anmerkungen zu Ausgestaltungen und Vorteilen entsprechend.

### Beschreibung bevorzugter Ausführungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine schematische Darstellung einer Sorptionskälteanlage in einstufiger Ausführung,
- Fig. 2: eine schematische Darstellung einer Verdampfereinrichtung für eine Sorptionskälteanlage, bei der dem Kältemittel Fremdwärmeenergie frei von stofflicher Zumischung übertragen wird, und
- Fig. 3: eine schematische Darstellung einer Verdampfereinrichtung für eine Sorptionskälteanlage, bei der dem Kältemittel Fremdwärmeenergie mittels stofflicher Zumischung zugeführt wird.

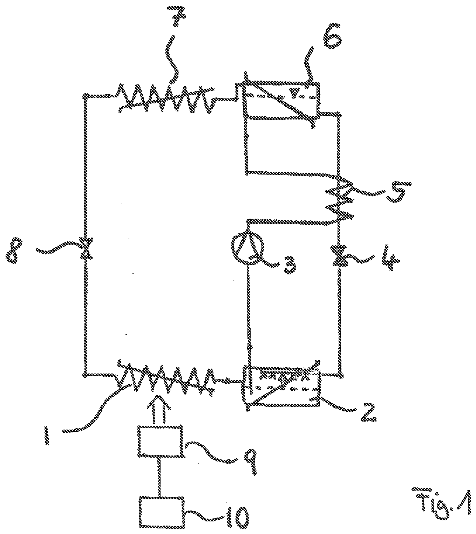

Fig. 1 zeigt eine schematische Darstellung einer Sorptionskälteanlage in einstufiger Ausführung, die als Absorptionskältemaschine ausgeführt ist.

In einer Verdampfereinrichtung 1 wird mittels Wärmetauscher einem zu kühlenden Fluid mit Hilfe eines Kältemittels Kühlwärme entzogen, derart, dass an der Oberfläche einer hierfür genutzten Wärmetauschereinrichtung das Kältemittel verdampft wird. Die hierbei dem zu kühlenden Fluid entzogene Kühlwärme bestimmt die Kälte- oder Kühlleistung der Sorptionskälteanlage. Das verdampfte Kältemittel wird einer Absorbereinrichtung 2 zugeführt, wo das verdampfte Kältemittel von einem Lösungsmittel aufgenommen wird. Dieses erfolgt bei der Absorptionskältemaschine mittels Absorption durch das flüssige Lösungsmittel. Im Fall einer Adsorptionskältemaschine wird an Stelle des flüssigen Lösungsmittels ein fester Stoff genutzt, der das verdampfte Kältemittel adsorbiert.

Bei der Sorptionskälteanlage nach Fig. 1 wird das Lösungsmittel dann unter Verwendung einer Pumpe 3 von dem niederen Absorberdruck auf einen hohen Austreiberdruck gebracht und gelangt durch einen Gegenstromwärmetauscher 5 zu einer Austreibereinrichtung 6, wo das von dem Lösungsmittel zuvor absorbierte Kältemittel unter Zuführung von aufzubringender Nutzwärme ausgetrieben wird. Der hierbei erzeugte Kältemitteldampf gelangt sodann zu einer Verflüssigereinrichtung 7, in welcher der Kältemitteldampf verflüssigt wird, um ihn anschließend über eine weitere Drossel 8 der Verdampfereinrichtung 1 wieder zuzuführen. Das so aufkonzentrierte Lösungsmittel wird durch eine Drossel 4 wieder der Absorbereinrichtung 2 zugeführt.

Gemäß Fig. 1 koppelt an die Verdampfereinrichtung 1 eine Wärmezuführeinrichtung 9, mit der Fremdwärmeenergie aus einer Fremdwärmequelle 10 auf das Kältemittel in der Verdampfereinrichtung 1 übertragen wird. Dieses geschieht zu dem Zweck, in dem Kältemittel, welches in der Verdampfereinrichtung 1 in einem Reservoir in Form eines Pools oder eines Sumpfes vorgehalten wird, eine Blasenbildung zu induzieren oder eine bereits bestehende Blasenbildung zu verstärken.

In der Verdampfereinrichtung 1 findet ein Verdampfungsprozess des Kältemittels an der Wärmetauschereinrichtung statt. In der Regel ist die Verdampfungswärme eines Fluid ein Vielfaches der spezifischen Wärmekapazität des Fluids, sodass eine adiabate Verdampfung, bei der das Fluid vorab unter höherem Druck erhitzt wird, nicht zur Anwendung kommt, auch wenn einzelne solcher Anwendungen grundsätzlich bekannt sind. Im Bereich der Verdampfereinrichtungen werden deshalb häufig Rohrbündelwärmeübertrager genutzt, die den für die Dampfströmung notwendigen Raum frei lassen. Solche Wärmetauscher können nach wenigstens drei unterschiedlichen Betriebsprinzipien betrieben werden, wobei Mischformen ebenso anwendbar sind. Die verschiedenen Bauformen können in der Verdampfereinrichtung 1 zum Einsatz kommen und werden nachfolgend näher erläutert.

In einer häufigen ersten Bauform ist ein von dem zu kühlenden Fluid durchströmtes Rohrbündel des Wärmetauschers in das Kältemittel getaucht. Das Kältemittel steht oder fließt in einem Reservoir. Die Wärmetauscherbauform ist relativ kompakt aber materialintensiv. Es können auch mehrere Sümpfe, die wie Etagen übereinander angeordnet sind, genutzt, so dass in jedem einzelnen Sumpf nur eine minimale Überdeckung der Wärmetauscherrohre entstehen kann. Die mehreren Sümpfe bilden bei dieser Ausgestaltung zusammen das Reservoir mit dem Kältemittel.

In einer zweiten Bauform wird ein Rohrbündel wie zuvor vom Fluid durchströmt, das Wärme abgeben soll. Das Kältemittel wird aber über dem Rohrbündel des Wärmetauschers verrieselt und rinnt am Rohrbündel herab. Der dünne fließende Film hat gute Wärme- und Stoffübergangswerte. Die Bauform hat unter Umständen einen größeren Raumbedarf als die oben beschriebene Variante. Eine verbesserte Benetzung des Wärmetauscherbündels wird durch Rezirkulation von nicht verdampftem Fluid erreicht, sodass die Wärmetauscherfläche vor allem auch in Teillast, aber auch in Volllast optimal genutzt wird.

Das dritte Prinzip folgt der zweiten Bauform, arbeitet aber ohne Rezirkulation. Es wird eine bestimmte Fluidmenge des Kältemittels über dem Rohrbündel verrieselt. Hier kann es jetzt, bevor es in den Sumpf abtropft, zur vollständigen Verdampfung kommen. Hierfür müssen in der Regel signifikante Anteile trockener Wärmetauscherfläche vorgehalten werden. Alternativ kommt es zum Abtropfen nicht verdampften Kältemittels, dass dann in der Regel irreversibel in den Prozess zurückgeführt wird. Mittels eines geeigneten Aufgabe- / Verrieselungssystems kann der Wärmetauscher in einem definierten Betriebsfall gut ausgenutzt werden, trockene Stellen zu vermeiden. Allen vorgenannten Bauformen des Wärmetauschers eigen ist, dass das zu verdampfende Kältemittel genau die Wärme aufnimmt, die das zu kühlende Fluid abgibt. Bei der Verdampfereinrichtung 1 können alle zuvor beschriebenen Bauarten vorteilhaft zum Einsatz kommen. Die Funktionsweise wird nachfolgend beispielhaft anhand eines teilüberfluteten Rieselfilmwärmeübertragers weiter erläutert. Die Vorteilhaftigkeit für die anderen Bauarten lässt sich daraus ableiten.

Erfindungsgemäß werden in einer Ausgestaltung Wärme-, Dampf- und / oder Gasströme genutzt, um dem Kältemittel Fremdwärme zuzuführen. Hierdurch wird das zu verdampfende Kältemittel im Pool in Bewegung gesetzt, was bis hin zum Ausbilden eines siedenden oder siedeähnlichen Zustandes führen kann. Verschiedene Ausführungen für Pool-Verdampfer sowie deren optimierte Auslegung in Abhängigkeit der Wärmestromdichten und des zu verdampfenden Fluids sind als solche bekannt, weshalb dies hier nicht näher erläutert wird.

Im Betrieb kann ein Siedeprozess im Kältemittelreservoir aus sich selbst heraus erfolgen. Hierbei stehen die Temperaturdifferenzen zwischen zu verdampfendem Kältemittel und dem abzukühlenden externen Medium zur Verfügung, die in der Regel wenige Kelvin betragen. Die vorgesehene Fremdwärmeeinleitung in das Kältemittel erzeugt höhere Übertemperaturen.

Die zugeführte Fremdwärme kann von beliebiger Herkunft sein. Die zugeführte Wärme ist in einer Ausführung ausreichend groß, um im Reservoir ein Sieden oder einen siedeähnlichen Zustand zu erzeugen. Durch die hiermit verbundene Blasenbildung im Reservoir wird das Kältemittel fremderregt.

Auch Dampf- und / oder Gasströmungen können genutzt werden, um die Fremdwärme auf das Kältemittel in der Verdampfereinrichtung 1 zu übertragen und hierdurch durch aufsteigende Blasen zu erzeugen, also einen Siedezustand oder einen siedeähnlichen Effekt zu erzielen. Hierdurch wird das Kältemittel in Bewegung versetzt, auch Spritzer können angeregt werden. Im Falle der Verwendung von Dampfströmungen kann es auch zum Phasenwechsel des Dampfes kommen.

Bei allen Arten der Fremderregung des Kältemittels (Fremdwärmeübertragung) wird der Wärmeübergang in der Verdampfereinrichtung 1 zwischen dem zu kühlenden Fluid und dem Kältemittel durch die Geschwindigkeitserhöhung des Kältemittels an der Wärmetauscheroberfläche deutlich verbessert. Zwei weitere Effekte verbessern darüber hinaus den Kühlwärmeübergang vom zu kühlenden Fluid auf das Kältemittel am Wärmetauscher. Einerseits werden durch Wellenbildung infolge des siedenden Kältemittels nicht benetzte Stellen des Wärmeübertragers des teilgefluteten Verdampfers benetzt und nehmen daraufhin aktiv an der Wärmeübertragung teil. Anderseits werden durch das Sieden Flüssigkeitstropfen oder Volumenelemente des Kältemittels teilweise zufällig im Rohrbündel verteilt. Sie tragen so zur besseren Benetzung des Bündels bei und erhöhen die Geschwindigkeit des gegebenenfalls vorhandenen und herab rieselnden Films des Kältemittels durch Impulsübertragung. Dies führt zu einer Verbesserung des Wärmeübergangskoeffizienten des Kältemittels an das Rohr. In Summe überkompensieren diese positiven Effekte so die Nachteile der zusätzlichen Last, also der auf das Kältemittel übertragenen Fremdwärme, für die nachgeschaltete Komponente der Sorptionskälteanlage, nämlich insbesondere die Absorbereinrichtung 2.

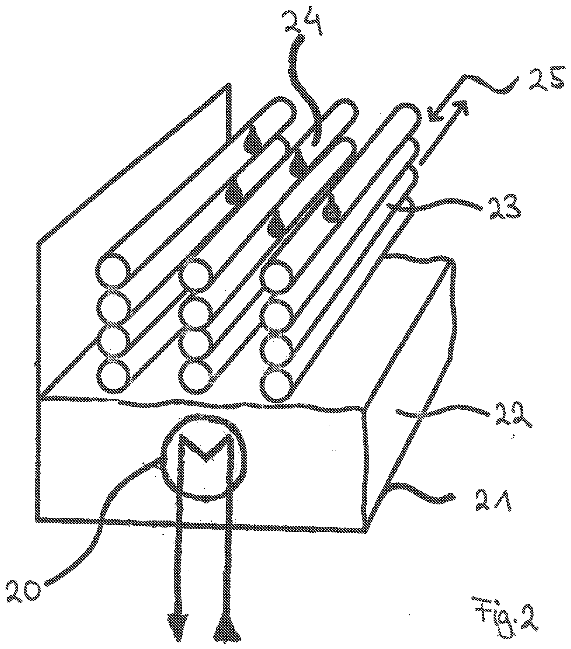

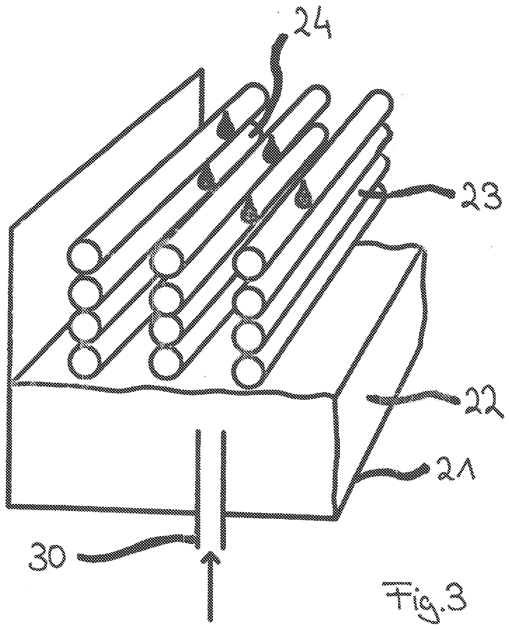

In den Fig. 2 und 3 sind schematisch unterschiedliche Ausführungsformen für die Einleitung der Fremdwärmeenergie in Verbindung mit der Verdampfereinrichtung 1 gezeigt.

Bei der Ausgestaltung in Fig. 2 erfolgt der Eintrag der Fremdwärmeenergie mit Hilfe eines zusätzlichen Wärmetauschers 20, der von einem erhitzten Fluid durchströmt wird und im Reservoir 21, welches bei der Sorptionskälteanlage in Fig. 1 der Verdampfereinrichtung 1 zugeordnet ist, im Kältemittel 22 angeordnet ist. Hierüber angeordnete Leitungs- oder Rohrabschnitte 23 eines Wärmetauschers 24 sind von dem in der Sorptionskälteanlage zu kühlenden Fluid 25 durchströmt. Mit Hilfe des zusätzlichen Wärmetauschers 20, der als Wärmezuführeinrichtung wirkt, werden in dem Kältemittel 22 die den Wärmeübertrag von dem zu kühlenden Fluid 25 auf das Kältemittel 22 unterstützenden Blasen induziert oder verstärkt.

Bei der Ausführungsform nach Fig. 3, in der für gleiche Merkmale die gleichen Bezugszeichen wie in Fig. 2 verwendet werden, erfolgt die Übertragung der Fremdwärmeenergie auf das Kältemittel 22 dadurch, dass über eine Zuführung 30 zusätzliches Kältemittel, welches eine gegenüber dem Kältemittel in dem Reservoir 21 erhöhte Temperatur aufweist, eingeleitet wird. Es kommt so zu einer stofflichen Mischung des im Reservoir 21 befindlichen Kältemittels 22 mit dem zusätzlichen Kältemittel. Infolge des Zustroms kommt es zum Sieden oder zum Ausbilden eines siedeähnlichen Zustandes mit Blasenbildung in dem Reservoir 21.

In der folgenden Tabelle 1 sind Verdampfungsleistungen verschiedener Anregungen zusammengefasst.

Für die experimentellen Untersuchungen wurde ein Rohr, unterhalb eines Verdampferreservoirs in Fluidverbindung mit dem Reservoir angebracht ist, von außen beheizt (vgl. Ausführung in Fig. 2). Bei den Messungen (4) bis (6) kurz wurde das Rohr unterhalb des Reservoirs angeordnet. Bei den Messungen (7) und (8) wurde das Rohr nach einem Bogen platziert, der das Rohr auf der vom Reservoir gewandten Seite in waagerechter Lage weiterlaufen lässt.

Die Messungen (1) bis (3) sind Vergleichsmessungen, bei denen auf das Kältemittel im Reservoir keine Fremdwärme eingespeist wurde.

Gemessen wurde jeweils die erbrachte Verdampfungsleistung der experimentell untersuchten Verdampfereinrichtung. Es ergibt sich, dass die Verdampfungsleistung bei Nutzung der Fremdwärme wesentlich erhöht werden konnte.

**Tabelle 1**

| Messung | Kurzbeschreibung | Leistung |
|---|---|---|
| (1) bis (3) | Verdampfungsleistung (Vergleichsmessung) | 38,47 kW |
| | | 38,64 kW |
| | | 38,24 kW |
| (4) bis (6) | Verdampfungsleistung bei beheiztem senkrechtem Rohr | 48,24 kW |
| | (Versuche) | 48,16 kW |
| | | 48,38 kW |
| (7), (8) | Verdampfungsleistung bei beheiztem waagerechtem Rohr | 45,36 kW |
| | (Versuche) | 44,97 kW |

Die beschriebenen Technologien können in Sorptionskälteanlagen, egal ob Ab- oder Adsorptionstechnik, die Kompaktheit des Anlagenaufbaus unterstützen. Die Hauptkomponenten dieser Anlagen wie Verdampfer, Absorber, Desorber und Kondensator sind häufig Wärmetauscher, die alle zwischen externen und internen Medien Wärme transportieren. Diese Wärmeübertrager sind hierbei für bis zu 50% der Kosten und bis zu 75% des Volumens der Kälteanlage verantwortlich. Optimierung des Layouts und der Funktion stellen die größten Potentiale zur Verbesserung dieser Kälteerzeugungsanlagen dar.

Die beschriebenen Technologien beziehen sich insbesondere auf eine Optimierung der Dampferzeugung in Verdampfungsprozessen zur Kälteerzeugung in Sorptionskälteanlagen. Vor allem Kälteanlagen, deren Prozess im Unterdruck stattfindet, können hieran wesentlich gewinnen, ohne sich das eine Beschränkung auf diese Anwendung gegeben ist. Die Technologien können insbesondere auch in sonstigen Anlagen zur Kälteerzeugung eingesetzt werden. Prinzipiell ist ein Einsatz in allen Anwendungen möglich, in denen ein Fluid in Teilen an einer Wärmetauscherfläche verdampfen soll, an deren unmittelbarer Nähe es somit in zwei Phasen vorliegt.

## Patentansprüche

1. Verfahren zum Betreiben einer Kälteanlage, bei dem
- ein Kältemittel (22) in einem Reservoir (21) einer Verdampfereinrichtung (1) einer ein- oder mehrstufigen Kälteanlage bereitgestellt wird,
- ein zu kühlendes Fluid (25) gekühlt wird, indem mittels eines Wärmetauschers (24) der Verdampfereinrichtung (1) zum Kühlen ein Kühlwärmeübertrag von dem zu kühlenden Fluid (25) auf das Kältemittel (22) erfolgt, und
- das Kältemittel (22) aufgrund des Kühlwärmeübertrages wenigstens teilweise am Wärmetauscher (24) verdampft und das verdampfte Kältemittel einer Verflüssigungseinrichtung (2) zugeführt wird,
**dadurch gekennzeichnet, dass** zum verbesserten Kühlwärmeübertrag auf das Kältemittel (22) von einer Fremdwärmequelle (10) bereitgestellte Fremdwärmeenergie übertragen wird, nämlich zusätzlich zu und getrennt von dem Kühlwärmeübertrag, und hierbei in dem Kältemittel (22) im Reservoir (21) eine den Kühlwärmeübertrag unterstützende Blasenbildung bewirkt wird, indem in Verbindung mit dem Zuführen der Fremdwärmeenergie die Blasenbildung mittels eines pool-boiling-Prozesses induziert oder eine infolge des Kühlwärmeübertrages ausgelöste Blasenbildung verstärkt wird.

2. Verfahren nach Anspruch 1, **dadurch gekennzeichnet, dass** in Verbindung mit dem Zuführen der Fremdwärmeenergie ein Siedezustand oder ein siedeähnlicher Zustand des Kältemittels (22) im Reservoir (21), der jeweils die Blasenbildung umfasst, bewirkt wird.

3. Verfahren nach Anspruch 1 oder 2, **dadurch gekennzeichnet, dass** dem Kältemittel (22) in dem Reservoir (21) wenigstens ein Teil der Fremdwärmeenergie mittels einer stofflichen Zumischung zu dem Kältemittel (22) zugeführt wird.

4. Verfahren nach mindestens einem der vorangehenden Ansprüche, **dadurch gekennzeichnet, dass** dem Kältemittel (22) in dem Reservoir (21) wenigstens ein Teil der Fremdwärmeenergie mittels stofflich getrennter Wärmeübertragung zugeführt wird.

5. Verfahren nach mindestens einem der vorangehenden Ansprüche, **dadurch gekennzeichnet, dass** die Fremdwärmeenergie mittels eines Fluidstroms bereitgestellt wird, dessen Fluidtemperatur zumindest vor dem Übertragen der Fremdwärmeenergie auf das Kältemittel (22) höher ist als die Temperatur des Kältemittels (22) im Reservoir (21).

6. Verfahren nach mindestens einem der vorangehenden Ansprüche, **dadurch gekennzeichnet, dass** die Fremdwärmeenergie mittels eines Fluidstroms bereitgestellt wird, dessen Fluidtemperatur zumindest vor dem Kühlen mittels Übertragen der Kühlwärmeenergie von dem zu kühlenden Fluid (25) auf das Kältemittel (22) höher ist als die Temperatur des zu kühlenden Fluids (25).

7. Verfahren nach mindestens einem der vorangehenden Ansprüche, **dadurch gekennzeichnet, dass** ein oder mehrere von dem zu kühlenden Fluid (25) durchströmte Leitungsabschnitte (23) des Wärmetauschers (24) in der Verdampfereinrichtung (1) zumindest teilweise in das Kältemittel (22) im Reservoir (21) eintauchend gebildet werden.

8. Verfahren nach mindestens einem der vorangehenden Ansprüche, **dadurch gekennzeichnet, dass** ein oder mehrere von dem zu kühlenden Fluid (25) durchströmte Leitungsabschnitte (23) des Wärmetauschers (24) in der Verdampfereinrichtung (1) mit dem Kältemittel (22) aus dem Reservoir (21) berieselt werden.

9. Verfahren nach mindestens einem der vorangehenden Ansprüche, **dadurch gekennzeichnet, dass** die Fremdwärmeenergie als Wärme aus einem der folgenden Prozesse bereitgestellt wird: Abwärme eines technologischen Prozesses, Wärme aus der Kraft-Wärme-Kopplung, Solarwärme und Wärme aus der Geothermie, Wärme aus einem prozessinternen Fluidstrom der Kälteanlage.

10. Kälteanlage in ein- oder mehrstufiger Ausführung, mit:
- einer Verdampfereinrichtung (1), die konfiguriert ist, mittels eines Wärmetauschers (24) zum Kühlen eines zu kühlenden Fluides (25) Kühlwärmeenergie von dem zu kühlenden Fluid auf ein in einem Reservoir (21) bereitgestelltes und im Umlauf genutztes Kältemittel (22) zu übertragen und hierbei das Kältemittel wenigstens teilweise am Wärmetauscher (24) zu verdampfen,
- einer Verflüssigungseinrichtung (2), die in Fluidverbindung mit der Verdampfereinrichtung (1) steht und konfiguriert ist, das verdampfte Kältemittel in einem Lösungsmittel zu absorbieren / adsorbieren,
- einer Austreiber- / Desorbereinrichtung (6), die in Fluidverbindung mit der Verflüssigungseinrichtung (2) steht und konfiguriert ist, das vom Lösungsmittel aufgenommene Kältemittel auszutreiben, indem Nutzwärme aufgewendet wird, und
- ein Verflüssiger (7), der in Fluidverbindung mit der Austreiber- / Desorbereinrichtung (6) und der Verdampfereinrichtung (1) steht und konfiguriert ist, das ausgetriebene Kältemittel zu verflüssigen und das verflüssigte Kältemittel zur Übertragung an die Verdampfereinrichtung (1) abzugeben,
**dadurch gekennzeichnet, dass** an die Verdampfereinrichtung (1) eine Wärmezuführeinrichtung (9) koppelt, die konfiguriert ist, von einer Fremdwärmequelle (10) bereitgestellte Fremdwärmeenergie auf das Kältemittel (22) im Reservoir (21) zu übertragen, nämlich zusätzlich zu und getrennt von dem Kühlwärmeübertrag, derart, dass in dem Kältemittel (22) im Reservoir (21) eine den Übertrag der Kühlwärmeenergie von dem zu kühlenden Fluid (25) auf das Kältemittel (22) unterstützende Blasenbildung bewirkt wird, indem in Verbindung mit dem Zuführen der Fremdwärmeenergie die Blasenbildung mittels pool-boiling induziert oder eine infolge des Kühlwärmeübertrages ausgelöste Blasenbildung verstärkt wird.

## Claims

1. A method for operating a refrigeration system, in which
- a coolant (22) is provided in a reservoir (21) of an evaporator device (1) of a single- or multi-stage refrigeration system,
- a fluid (25) to be cooled is cooled in that a cooling heat transfer from the fluid (25) to be cooled to the coolant (22) takes place by means of a heat exchanger (24) of the evaporator device (1) for cooling, and
- the coolant (22) evaporates at least partially at the heat exchanger (24) owing to the cooling heat transfer and the evaporated coolant is supplied to a condensing device (2),
**characterized in that** external heat energy provided by an external-heat source (10) is transferred for improved cooling heat transfer to the coolant (22), namely additionally to and separately from the cooling heat transfer, and bubble formation supporting the cooling heat transfer is effected here in the coolant (22) in the reservoir (21) **in that**, in connection with the supply of the external heat energy, the bubble formation is induced by means of a pool boiling process or bubble formation triggered as a consequence of the cooling heat transfer is amplified.

2. The method according to Claim 1, **characterized in that**, in connection with the supply of the external heat energy, a boiling state or a state similar to boiling of the coolant (22) is effected in the reservoir (21), which respective state comprises bubble formation.

3. The method according to Claim 1 or 2, **characterized in that** at least part of the external heat energy is supplied to the coolant (22) in the reservoir (21) by means of a material admixture to the coolant (22).

4. The method according to at least one of the preceding claims, **characterized in that** at least part of the external heat energy is supplied to the coolant (22) in the reservoir (21) by means of materially separate heat transfer.

5. The method according to at least one of the preceding claims, **characterized in that** the external heat energy is provided by means of a fluid flow, the fluid temperature of which is higher than the temperature of the coolant (22) in the reservoir (21) at least before the transfer of the external heat energy to the coolant (22).

6. The method according to at least one of the preceding claims, **characterized in that** the external heat energy is provided by means of a fluid flow, the fluid temperature of which is higher than the temperature of the fluid (25) to be cooled at least before the cooling by means of the transfer of the cooling heat energy from the fluid (25) to be cooled to the coolant (22).

7. The method according to at least one of the preceding claims, **characterized in that** one or more line sections (23) of the heat exchanger (24), through which the fluid (25) to be cooled flows, are formed in the evaporator device (1) such that they are immersed at least partially into the coolant (22) in the reservoir (21).

8. The method according to at least one of the preceding claims, **characterized in that** one or more line sections (23) of the heat exchanger (24), through which the fluid (25) to be cooled flows, are sprinkled in the evaporator device (1) with the coolant (22) from the reservoir (21).

9. The method according to at least one of the preceding claims, **characterized in that** the external heat energy is provided as heat from one of the following processes: waste heat of a technological process, heat from power-heat coupling, solar heat and geothermal heat, heat from a process-internal fluid flow of the refrigeration system.

10. A refrigeration system in a single- or multi-stage design, having:
- an evaporator device (1), which is configured, for cooling a fluid (25) to be cooled, to transfer cooling heat energy from the fluid to be cooled to a coolant (22), provided in a reservoir (21) and used in circulation, by means of a heat exchanger (24) and in doing so to evaporate the coolant at least partially at the heat exchanger (24),
- a condensing device (2) which is in fluid connection with the evaporator device (1) and is configured to absorb/adsorb the evaporated coolant in a solvent,
- an expeller/desorber device (6), which is in fluid connection with the condensing device (2) and is configured to expel the coolant received by the solvent by expending useful heat, and
- a condenser (7) which is in fluid connection with the expeller/desorber device (6) and the evaporator device (1) and is configured to condense the expelled coolant and to discharge the condensed coolant for transfer to the evaporator device (1),
**characterized in that** a heat-supply device (9) couples to the evaporator device (1), which heat-supply device (9) is configured to transfer external heat energy provided by an external-heat source (10) to the coolant (22) in the reservoir (21), namely additionally to and separately from the cooling heat transfer, such that bubble formation supporting the transfer of the cooling heat energy from the fluid (25) to be cooled to the coolant (22) is effected in the coolant (22) in the reservoir (21) **in that**, in connection with the supply of the external heat energy, the bubble formation is induced by means of pool boiling or bubble formation triggered as a consequence of the cooling heat transfer is amplified.

## Revendications

1. Procédé, destiné à faire fonctionner une installation frigorifique, lors duquel :
- un agent réfrigérant (22) est mis à disposition dans un réservoir (21) d'un système d'évaporateur (1) d'une installation frigorifique à une ou à plusieurs étapes,
- un fluide (25) à refroidir est refroidi en ce qu'au moyen d'un échangeur thermique (24) du système d'évaporateur (1), pour le refroidissement, un transfert de chaleur refroidissant a lieu du fluide (25) à refroidir sur l'agent réfrigérant (22), et
- du fait du transfert de chaleur refroidissant, l'agent réfrigérant (22) s'évapore au moins en partie sur l'échangeur thermique (24) et l'agent réfrigérant évaporé est amené vers un système de liquéfaction (2),
**caractérisé en ce que** pour un transfert de chaleur refroidissant amélioré, de l'énergie thermique externe mise à disposition par une source de chaleur externe (10) est transférée sur l'agent réfrigérant (22), à savoir en supplément et séparément du transfert de chaleur refroidissant, et à cet effet, dans l'agent réfrigérant (22), il est provoqué dans le réservoir (21) une formation de bulles assistant le transfert de chaleur refroidissant **en ce qu'**en association avec l'alimentation de l'énergie thermique externe, la formation de bulles est induite au moyen d'un processus d'ébullition libre ou une formation de bulles déclenchée suite au transfert de chaleur refroidissant est renforcée.

2. Procédé selon la revendication 1, **caractérisé en ce qu'**en association avec l'alimentation de l'énergie thermique externe, un état d'ébullition ou un état analogue à une ébullition de l'agent réfrigérant (22), qui comprend respectivement la formation de bulles est provoqué dans le réservoir (21).

3. Procédé selon la revendication 1 ou 2, **caractérisé en ce qu'**au moins une partie de l'énergie thermique externe est amenée à l'agent réfrigérant (22) dans le réservoir (21) au moyen d'un mélange de matière à l'agent réfrigérant (22).

4. Procédé selon au moins l'une quelconque des revendications précédentes, **caractérisé en ce qu'**au moins une partie de l'énergie thermique externe est alimentée vers l'agent réfrigérant (22) dans le réservoir (21) au moyen d'un transfert thermique séparé par matières.

5. Procédé selon au moins l'une quelconque des revendications précédentes, **caractérisé en ce que** l'énergie thermique externe est mise à disposition au moyen d'une circulation de fluide dont la température du fluide est supérieure à la température de l'agent réfrigérant (22) dans le réservoir (21) au moins avant le transfert de l'énergie thermique externe sur l'agent réfrigérant (22).

6. Procédé selon au moins l'une quelconque des revendications précédentes, **caractérisé en ce que** l'énergie thermique externe est mise à disposition au moyen d'une circulation de fluide, dont la température du fluide est supérieure à la température du fluide (25) à refroidir au moins avant le refroidissement par transfert de l'énergie thermique de refroidissement du fluide (25) à refroidir sur l'agent réfrigérant (22).

7. Procédé selon au moins l'une quelconque des revendications précédentes, **caractérisé en ce qu'**un ou plusieurs tronçons de conduit (23) de l'échangeur thermique (24) traversés par le fluide (25) à refroidir dans le système d'évaporateur (1) sont conçus au moins partiellement en étant immergés dans l'agent réfrigérant (22) dans le réservoir (21).

8. Procédé selon au moins l'une quelconque des revendications précédentes, **caractérisé en ce qu'**un ou plusieurs tronçons de conduit (23) de l'échangeur thermique (24) traversés par le fluide (25) à refroidir dans le système d'évaporateur (1) sont arrosés avec l'agent réfrigérant (22) hors du réservoir (21).

9. Procédé selon au moins l'une quelconque des revendications précédentes, **caractérisé en ce que** l'énergie thermique externe est mise à disposition sous la forme de chaleur à partir de l'un des processus suivants : chaleur perdue d'un processus technologique, chaleur issue d'un système de cogénération, chaleur solaire et chaleur issue de la géothermie, chaleur issue d'une circulation de fluide interne au processus de l'installation frigorifique.

10. Installation frigorifique dans une version à une ou à plusieurs, étapes comprenant :
- un système d'évaporateur (1), qui est configuré, au moyen d'un échangeur thermique (24) destiné au refroidissement d'un fluide (25) à refroidir, pour transférer de l'énergie thermique refroidissante du fluide à refroidir sur un agent réfrigérant (22) mis à disposition dans un réservoir (21) et utilisé en circuit, pour transférer et faire s'évaporer à cet effet au moins partiellement l'agent réfrigérant sur l'échangeur thermique (24),
- un système de liquéfaction (2), qui est en liaison fluidique avec le système d'évaporateur (1) et qui est configuré pour absorber / adsorber l'agent réfrigérant évaporé dans un solvant,
- un système extracteur / désorbant (6) qui est en liaison fluidique avec le système de liquéfaction (2) et qui est configuré pour extraire l'agent réfrigérant absorbé par le solvant en dépensant de la chaleur utile et
- un condenseur (7) qui est en liaison fluidique avec le système extracteur / désorbant (6) et avec le système d'évaporateur (1) et qui est configuré pour liquéfier l'agent réfrigérant extrait et pour restituer l'agent réfrigérant liquéfié pour le transférer au système d'évaporateur (1),
**caractérisé en ce que** sur le système d'évaporateur (1) est couplé un système d'alimentation thermique (9) qui est configuré pour transférer de l'énergie thermique externe mise à disposition par une source de chaleur externe (10) sur l'agent réfrigérant (22) dans le réservoir (21), à savoir en supplément et séparément du transfert de chaleur refroidissant, de telle sorte, que dans l'agent réfrigérant (22) dans le réservoir (21) soit provoquée une formation de bulles assistant le transfert de l'énergie thermique refroidissante du fluide (25) à refroidir sur l'agent réfrigérant (22) **en ce qu'**en association avec l'alimentation de l'énergie thermique externe, la formation de bulles est induite au moyen d'une ébullition libre ou **en ce qu'**une formation de bulles déclenchée suite au transfert de chaleur refroidissant est renforcée.
